# EUROPÄISCHE PATENTSCHRIFT

(11) **EP 1 784 911 B1**
(45) Veröffentlichungstag und Bekanntmachung des Hinweises auf die Patenterteilung: **13.04.2011**
(21) Anmeldenummer: 05769941.5
(22) Anmeldetag: 23.06.2005
(51) Int. Cl.: H02P 7/29, H02P 7/28, H02P 7/285

(54) **SCHALTUNGSANORDNUNG UND VERFAHREN ZUM BETREIBEN EINES ELEKTROMOTORS MIT VERÄNDERLICHER DREHZAHL AN EINER GLEICHSPANNUNGSQUELLE**
CIRCUIT ARRANGEMENT AND METHOD FOR OPERATING AN ELECTRIC MOTOR WITH VARYING ROTATIONAL SPEED AT A CONSTANT-VOLTAGE SOURCE
CIRCUIT ET PROCEDE POUR ACTIONNER UN MOTEUR ELECTRIQUE A VITESSE VARIABLE SUR UNE SOURCE DE TENSION CONTINUE

(30) Priorität: 28.08.2004 DE 102004041765
(43) Veröffentlichungstag der Anmeldung: 16.05.2007
(73) Patentinhaber: ROBERT BOSCH GMBH, 70442 Stuttgart (DE)
(72) Erfinder: KNAB, Norbert, 77767 Appenweier (DE); LUNGHARD, Karlheinz, 77830 Buehlertal (DE); THOELKE, Holger, 77855 Achern (DE)
(86) Internationale Anmeldenummer: PCT/EP2005/052929
(87) Internationale Veröffentlichungsnummer: WO 2006/024555

(56) Entgegenhaltungen:
- DE-A1- 10 049 755
- US-A- 4 829 218
- PATENT ABSTRACTS OF JAPAN Bd. 015, Nr. 284 (E-1091), 18. Juli 1991 (1991-07-18) -& JP 03 098480 A (TOSHIBA CORP; others: 01), 24. April 1991 (1991-04-24)

## Beschreibung

### Stand der Technik

Die Erfindung betrifft eine Schaltungsanordnung und ein Verfahren zum Betreiben eines Elektromotors mit veränderlicher Drehzahl an einer Gleichspannungsquelle, insbesondere zum Betreiben eines Kühlluftgebläsemotors eines Kraftfahrzeuges an dessen Bordnetz. Derartige Betriebssysteme für Elektromotoren, insbesondere für Bürstenmotoren von Kühlluftgebläsen für Kraftfahrzeuge, sind grundsätzlich bekannt, wobei die Drehzahleinstellung des Motors entweder über pulsweitenmodulierte (PWM-) Signale und getaktete Regler oder über geschaltete Motorstromkreise mit unterschiedlichen Vorwiderständen erfolgt. Das übliche Konzept bei einer Motorsteuerung mittels getakteter Regler ist die Spannungsversorgung des Motors unter Verwendung eines Mikrocontrollers, wobei beliebig viele Betriebszustände des Motors realisiert werden können. Bei der Stromversorgung des Motors über unterschiedliche Vorwiderstände werden Schalter oder Relais genutzt, welche direkt mit einem Spannungssignal angesteuert werden und über getrennte Stromkreise mit unterschiedlichen Vorwiderständen einen Motorbetrieb mit jeweils vorgegebener Drehzahl ermöglichen. Die gewünschte Motordrehzahl wird dabei in der Regel durch Thermoschalter vorgegeben. Hierbei bietet das Konzept mit getrennten Motorschaltkreisen den Vorteil niedriger Kosten, solange nur etwa zwei unterschiedliche Drehzahlstufen gefordert werden. Zur Einstellung mehrerer Drehzahlen schlägt das Dokument JP 03098480 das Aktivieren und Deaktivieren der in Reihe geschalteten Vorwiderstände über Thyristoren vor, die jeweils parallel zu den Vorwiderständen geschaltet sind. Die getaktete Ansteuerung des Motors mit pulsweitenmodulierten Signalen bietet dagegen viele Möglichkeiten bei der Zuordnung einer günstigen Motordrehzahl, der technische und kostenmäßige Aufwand für derartige Schaltungsanordnungen ist jedoch beträchtlich, da wegen der Komplexität der Auswertung der PWM Signale hierbei im Regelfall Mikrocontroller eingesetzt werden müssen.

Der Erfindung liegt die Aufgabe zugrunde, eine technisch vorteilhafte und kostenmäßig günstige Möglichkeit zum Betreiben eines Elektromotors mit unterschiedlichen Drehzahlen an einer Gleichspannungsquelle zu schaffen, welche die Auswahl einer größeren Zahl von Drehzahlstufen mit einer kostengünstigen Schaltungsanordnung erlaubt. Dies wird erreicht durch die Merkmale der Ansprüche 1 und 7, welche einen Schaltungsaufbau und einen Motorbetrieb mit wenigen diskreten Bauelementen ohne Mikrocontroller erlauben.

Zur Umwandlung der pulsweitenmodulierten Eingangssignale des Umsetzers kann vorteilhafterweise eine einfache Integrationsschaltung mit wenigen Bauelementen verwendet werden, welche einerseits an eine Spannungsquelle angeschlossen und andererseits mit dem die pulsweitenmodulierten Signale liefernden Ausgang der Steuereinheit für den Elektromotor verbunden ist. Eine derartige Einrichtung ermöglicht die preiswerte Bereitstellung eines sägezahnförmigen Integrationssignals entsprechend den Puls- und Pausenzeiten des pulsweitenmodulierten Ausgangssignals der Steuereinheit. Eine besonders einfache Schaltungsanordnung erhält man, wenn der von Masse abgewandte Anschluss eines Kondensators der Integrationseinrichtung des Umsetzers über einen ohmschen Widerstand mit seiner Bezugsspannungsquelle und zusätzlich über eine Entkoppelungsdiode und einen Entladewiderstand mit dem Ausgang der Steuereinheit verbunden ist, wobei der Ausgang der Steuereinheit über die Kollektor-Emitter-Strecke eines Transistors direkt mit Masse verbindbar ist. Hierbei kann der Entladewiderstand des Kondensators gleichzeitig Teil von dessen Ladekreis sein.

Die erfindungsgemäße Schaltungsanordnung kann weiterhin in vorteilhafter Weise so ausgestaltet werden, dass der von Masse abgewandte Anschluss des Kondensators der Integrationseinrichtung des Umsetzers direkt mit je einem Eingang von mehreren parallel geschalteten Komparatoren verbunden ist, deren Referenzeingänge mit unterschiedlichen Schwellwert-Spannungen belegt sind. Die Ausgänge der Komparatoren können dann über je einen Verstärker, zum Beispiel in Form eines Transistors, je ein Relais steuern, deren Schaltkontakte einerseits parallel jeweils an einem Anschluss des Elektromotors und andererseits getrennt über Vorwiderstände, beziehungsweise direkt an Masse liegen. So wird entsprechend dem Tastverhältnis der PWM-Signale am Eingang des Umsetzers ein mehr oder weniger stark widerstandsbehafteter Stromkreis des Elektromotors gegen Masse geschaltet, während der andere Anschluss des Elektromotors dauernd am Pluspol der Spannungsquelle liegt. Hierbei ist es möglich, dass entsprechend dem Tastverhältnis des PWM-Signals am Eingang des Umsetzers die Schaltschwellen mehrerer Komparatoren überschritten sind, so dass sich der resultierende Widerstand im Motorstromkreis aus der Parallelschaltung verschiedener Vorwiderstände ergibt.

Als besonders vorteilhaft hat es sich weiterhin erwiesen, wenn die Integrationseinrichtung und die verschiedenen Komparatoren an die gleiche Spannungsquelle angeschlossen sind. So ergibt sich, beispielsweise bei Spannungsschwankungen im Bordnetz eines Kraftfahrzeuges, dennoch ein unverfälschtes Ansteuersignal für den Elektromotor, da eine Veränderung der gemeinsamen Versorgungsspannung sich in gleicher Weise in der Höhe des Integrationssignals und der Schaltschwelle der Komparatoren auswirkt, so dass die durch das Tastverhältnis des PWM-Eingangssignals vorgegebene Motordrehzahl erhalten bleibt.

Weiter Einzelheiten und Ausgestaltungen der Erfindung ergeben sich aus den Unteransprüchen und der Beschreibung eines Ausführungsbeispiels.

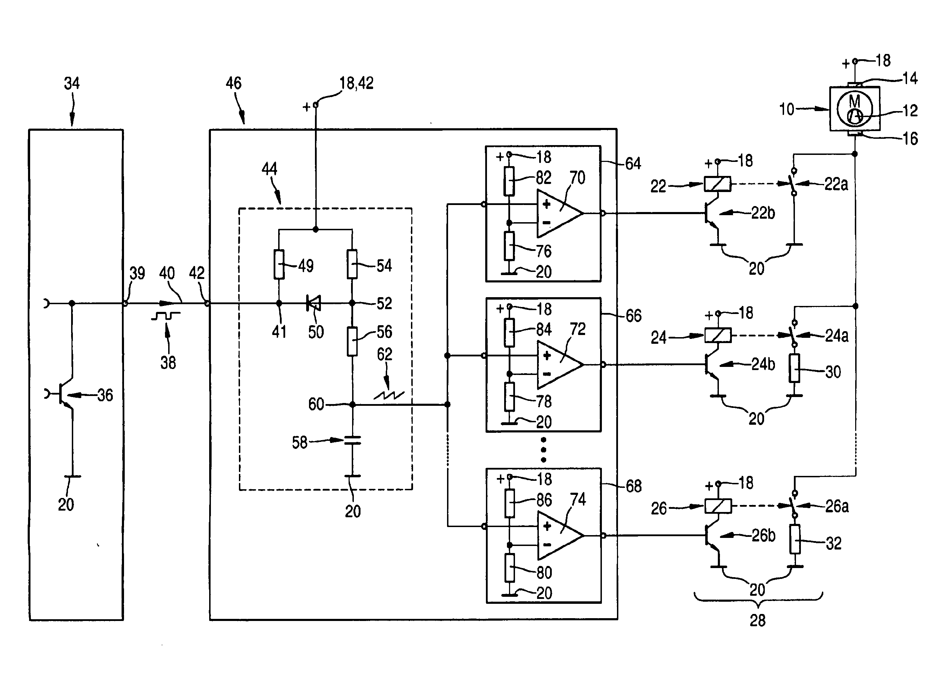

Die Figur zeigt eine Schaltungsanordnung zum Betreiben eines Kühlluftgebläsemotors eines Kraftfahrzeuges an dessen Bordnetz.

In der Zeichnung ist mit 10 ein Elektromotor bezeichnet, welcher mit einem Kühlluftgebläse 12 mechanisch gekoppelt und über Bürsten 14, 16 aus dem Bordnetz eines Kraftfahrzeuges gespeist wird. Der Pluspol der Spannungsquelle ist mit 18, der Masseanschluss mit 20 bezeichnet. Während die Bürste 14 des Elektromotors 10 dauernd mit dem Pluspol 18 der Spannungsquelle verbunden ist, liegt die Bürste 16 über eine Mehrzahl von parallelen, über Relaiskontakte 22a, 24a und 26a geschaltete Stromkreise am Masseanschluss 20. Die Relaiskontakte 22a, 24a und 26a werden betätigt durch Relais 22, 24 und 26, welche über je einen Verstärker 22b, 24b, 26b in Form je eines Transistors geschaltet werden. Hierbei liegt der Relaiskontakt 22a direkt an Masse 20, der Relaiskontakt 24a ist über einen Widerstand 30 und der Relaiskontakt 26a über einen Widerstand 32 mit Masse verbunden. Die Widerstandswerte der Widerstände 30 und 32 können gleich oder unterschiedlich sein, Bei Verwendung gebräuchlicher Kühlluftgebläsemotoren am 12V-Bordnetz eines Kraftfahrzeuges liegen die Werte im Bereich von etwa 100 mΩ bis etwa 400 mΩ. Die unterschiedlichen Drehzahlen des Elektromotors 10 ergeben sich bei Verwendung gleich großer Widerstände 30 und 32 dadurch, dass sich bei Erreichen der höheren Schaltschwelle am Komparator 66 ein geringerer Gesamtwiderstand durch die Parallelschaltung des Widerstandes 30 zum Widerstand 32 ergibt.

Durch die gestrichelte Unterbrechung des Stromkreises von der Bürste 16 zum Massepol 20 soll darauf hingewiesen werden, dass die Zeichnung nur ein Ausführungsbeispiel darstellt und dass an Stelle von drei Relais auch eine größere Anzahl von Relais mit einer größeren Anzahl von Ankerstromkreisen mit unterschiedlichen Widerständen eingesetzt werden können.

Die Sollwerte der jeweiligen Motordrehzahl werden vorgegeben durch das Tastverhältnis der PWM-Signale am Eingang der erfindungsgemäßen Schaltungsanordnung. Diese liefert eine in der Zeichnung nur schematisch dargestellte Steuereinheit 34 mit einem gegen Masse geschalteten Transistor 36 an ihrem Ausgang 39, an dessen Kollektor die pulsweitenmodulierten Signale (PWM-Signale) 38 für die Drehzahlsteuerung des Elektromotors 10 anstehen. Ein derartiger Transistor als Schalter gegen Masse wird als 'Open-Collector-Transistor' bezeichnet.

Die PWM-Signale 38 gelangen dann über eine Leitung 40 zum Eingang 42 der Integrationseinrichtung 44 eines Umsetzers 46. Die Integrationseinrichtung 44 liegt am Pluspol 18 der Spannungsquelle, welcher über einen Widerstand 49 und einen Verbindungspunkt 41 mit dem Eingang 42 der Integrationseinrichtung verbunden ist. An dem Verbindungspunkt 41 liegt gleichzeitig die Kathode einer Entkopplungsdiode 50, deren Anode mit einem Abgriff 52 zwischen zwei Widerständen 54 und 56 im Lade- beziehungsweise Entladekreis des Kondensators 58 verbunden ist. Eine Elektrode des Kondensators 58 liegt an Masse 20, seine andere Elektrode ist über die beiden Widerstände 54 und 56 mit dem Pluspol 18 der Spannungsquelle, beziehungsweise mit der Anode der Diode 50 verbunden. An dem von der Masse 20 der Spannungsquelle abgewandten Anschluss 60 des Kondensators 58 erscheint dann ein hinsichtlich seines Gleichspannungsanteils und seiner Form von dem Tastverhältnis des PWM-Signals 38 abhängiges Sägezahnsignal 62.

Die Auswertung des Sägezahn-Signals 62 erfolgt durch mehrere, eingangsseitig parallel geschaltete Komparatoren 64, 66 und 68, welche ausgangsseitig einzeln die Relais 22, 24 und 26 über Verstärker 22b, 24b und 26b, hier in Form von Transistoren, steuern. Die Komparatoren 64, 66 und 68 sind prinzipiell gleich aufgebaut mit jeweils einem Operationsverstärker 70, 72 und 74 und mit je einem einerseits am Pluspol 18 und andererseits am Massepol 20 der Spannungsquelle liegenden Spannungsteiler mit unterschiedlichen Teilerwiderständen. Werden beispielsweise die jeweils am Pluspotential 18 liegenden Teilerwiderstände 82, 84 und86 mit je 20 kΩ bemessen, so könnten die jeweils an Masse 20 angeschlossenen Teilerwiderstände 76 mit 10 kΩ, 78 mit 5 kΩ und 80 mit 3 kΩ bemessen werden, um geeignete unterschiedliche Schaltschwellen am jeweils invertierenden Eingang der Operationsverstärker 70, 72 und 74 zu definieren.

Die Schaltungsanordnung arbeitet folgendermaßen:

Am Ausgang der Steuereinheit 34, beziehungsweise am Kollektor des Transistors 36 erscheinen PWM-Signale 38, deren Pegel sich zwischen dem Potential der Spannungsquelle 18 und Massepotential verändert. Das Tastverhältnis der PWM-Signale 38, also die jeweilige Pulsbeziehungsweise Pausendauer bestimmt die Drehzahl des Elektromotors 10, wobei im vorliegenden Fall einer längeren Pulsdauer des PWM-Signals 38 eine höhere Drehzahl des Motors 10 zugeordnet wird. Entsprechend dem Verlauf der PWM-Signale 38 schwankt auch das Potential am Verbindungspunkt 41 des Widerstandes 49 mit der Kathode der Diode 50 zwischen dem Potential des Pluspoles 18 der Spannungsquelle und Masse. Solange das Potential am Verbindungspunkt 41 dem Potential der Spannungsquelle entspricht, wird der Kondensator 58 über die Reihenschaltung der Widerstände 54 und 56 aufgeladen. Der Ladevorgang endet, wenn am Verbindungspunkt 41 Massepotential erscheint und der Kondensator 58 sich über den Teilwiderstand 56 seines Ladekreises und über die Diode 50 soweit entlädt, bis am Verbindungspunkt 41 wieder die positive Flanke des PWM-Signals 38 erscheint. Am Anschluss 60 des Kondensators 58 entsteht hierbei eine sägezahnförmige Gleichspannung, deren Mittelwert mit dem Tastverhältnis der PWM-Signale 38 zunimmt.

Die in ihrem Niveau veränderliche Sägezahnspannung 62 liegt nun gleichzeitig an den Eingängen der drei Komparatoren 64, 66 und 68, wobei nur diejenigen Operationsverstärker 70, 72, 74 durchschalten, deren Referenzsignal am invertierenden Eingang niedriger ist als das Sägezahn-Signal 62 am nicht invertierenden Eingang. Dies bedeutet, dass bei kleinem Tastverhältnis der PWM-Signale 38 am Eingang des Umsetzers 46, beziehungsweise am Eingang der Integrationseinrichtung 44 nur der Komparator 68 mit der niedrigsten Schwellenspannung entsprechend dem Verhältnis seiner Teilerwiderstände 80 und 86 durchschaltet und dadurch der Relaiskontakt 26a geschlossen wird. Da der Vorwiderstand 32 im Ankerstromkreis des Elektromotors 10 den größtmöglichen Vorwiderstand darstellt, dreht der Elektromotor 10 nun mit der niedrigsten Drehzahl. Mit steigendem Niveau der Sägezahnspannung 62 schaltet danach auch der Komparator 66 durch und aktiviert über den Verstärker 24b das Relais 24 zur Schließung des Relaiskontaktes 24a. Der Widerstandswert der Parallelschaltung aus den Widerständen 30 und 32 ist nun kleiner als derjenige des Widerstandes 32 alleine, so dass sich für den Elektromotor 10 eine höhere Drehzahl ergibt. Entsprechend wird bei noch weiterem Anstieg des Pegels des Sägezahnsignals 62 über den Komparator 64 und den Verstärker 22b das Relais 22 aktiviert und der Relaiskontakt 22a geschlossen, so dass der Motor ohne Vorwiderstand mit Masse verbunden wird und seine Maximaldrehzahl erreicht, unabhängig davon, ob die Relaiskontakte 24a und 26a geschlossen sind. Andererseits können die Relaiskontakte 22a, 24a und 26a auch getrennt schaltbar ausgeführt werden, so dass mit dem Ansprechen des Relais 24 der Relaiskontakt 26a geöffnet wird und allein der Vorwiderstand 30 im Motorstromkreis wirksam ist. Gegebenenfalls können auch Zwischenstufen für die Motordrehzahl durch wahlweise Einzel- oder Parallelschaltung der Vorwiderstände geschaffen werden. In diesem Fall wird der Wert des Widerstandes 30 kleiner bemessen als der Wert des Widerstandes 32.

Die Anzahl von drei Komparatoren 64, 66 und 68 ist nur beispielhaft gewählt. Diese Zahl und damit die Zahl der vorgebbaren Drehzahlstufen des Elektromotors 10 kann auch höher gewählt werden, wobei sich kostenmäßig eine Obergrenze ergibt durch einen Vergleich der Kosten der erfindungsgemäßen Schaltung mit einer getakteten Regelung unter Verwendung eines Mikrocontrollers.

Zusammenfassend kann die erfindungsgemäße Schaltungsanordnung dahingehend charakterisiert werden, dass mit geringem Schaltungsaufwand die im Tastverhältnis des PWM-Signals 38 enthaltene Information über den Ansteuerwert des Motors kostengünstig zur Drehzahleinstellung des Motors genutzt wird. Hierbei werden aus dem eingangsseitigen PWM-Signal 38 ohne Verwendung eines Mikrocontrollers direkt Ausgangssignale generiert, mit welchen im Ausführungsbeispiel Relais angesteuert werden. Anstelle von Relais können selbstverständlich auch andere Schalteinrichtungen wie beispielsweise MOSFETs in den Motorstromkreisen eingesetzt werden.

## Patentansprüche

1. Schaltungsanordnung zum Betreiben eines Elektromotors (10) mit veränderlicher Drehzahl an einer Gleichspannungsquelle (18, 20), insbesondere zum Betreiben eines Kühlluftgebläsemotors eines Kraftfahrzeuges an dessen Bordnetz, mit einer Schalteinrichtung (28) im Speisestromkreis des Elektromotors (10), welche den Motorstromkreis über Schaltstrecken (22a, 24a, 26a) mit unterschiedlichen Vorwiderständen (30, 32) schließt, sowie mit einem pulsweitenmodulierte Eingangssignale (38) einer Steuereinheit (34) integrierenden Umsetzer (46), **dadurch gekennzeichnet, dass** der Umsetzer (46) eine Mehrzahl von Komparatoren (64, 66, 68) mit verschiedenen Schaltschwellen aufweist, deren Ausgänge jeweils mit der elektrischen Schalteinrichtung (28) verbunden sind, wobei ein Anschluss (60) einer Integrationseinrichtung (44) des Umsetzers (46) derart mit je einem Eingang der Komparatoren (64, 66, 68) verbunden ist, dass an ihm ein hinsichtlich seines Gleichspannungsanteils und seiner Form von dem Tastverhältnis der pulsweitenmodulierten Eingangssignale (38) abhängiges Sägezahnsignal (62) anliegt.

2. Schaltungsanordnung nach Anspruch 1, **dadurch gekennzeichnet, dass** das in seinem Spannungsniveau veränderliche Sägezahnsignal (62) gleichzeitig an den Eingängen der Komparatoren (64, 66, 68) anliegt, wobei nur diejenigen Operationsverstärker (70, 72, 74) der Komparatoren (64, 66, 68) durchschalten, deren Referenzsignal am invertierenden Eingang niedriger ist, als das Sägezahnsignal (62) am nicht invertierenden Eingang.

3. Schaltungsanordnung nach einem der vorhergehenden Ansprüche, **dadurch gekennzeichnet, dass** der Ausgang (39) der Steuereinheit (34) für den Elektromotor (10) über die Kollektor-Emitter-Strecke eines Transistors (36) mit Masse (20) verbindbar ist.

4. Schaltungsanordnung nach einem der vorhergehenden Ansprüche, **dadurch gekennzeichnet, dass** die Integrationseinrichtung (44) und die Komparatoren (64, 66, 68) an die gleiche Bezugsspannungsquelle (18, 20) angeschlossen sind.

5. Schaltungsanordnung nach einem der vorhergehenden Ansprüche, **dadurch gekennzeichnet, dass** der von Masse (20) abgewandte Anschluss (60) eines Kondensators (58) der Integrationseinrichtung (44) einerseits mit je einem Eingang der Komparatoren (64, 66, 68) und andererseits über eine Entkopplungsdiode (50) und einen Widerstand (56) mit einem die pulsweitenmodulierten Eingangssignale (38) liefernden Ausgang (39) der Steuereinheit (34) verbunden ist.

6. Schaltungsanordnung nach einem der vorhergehenden Ansprüche, **dadurch gekennzeichnet, dass** die Ausgänge der Komparatoren (64, 66, 68) über Verstärker (22b, 24b, 26b) an Relais (22, 24, 26) angeschlossen sind, deren Schaltkontakte (24a, 26a, 28a) einerseits parallel jeweils an einem Anschluss (16) des Elektromotors (10) und andererseits getrennt über Vorwiderstände (30, 32) oder direkt an Masse (20) liegen.

7. Verfahren zum Betreiben eines Elektromotors (10) mit veränderlicher Drehzahl an einem Gleichspannungsnetz (18, 20), insbesondere zum Betreiben eines Kühlluftgebläsemotors eines Kraftfahrzeuges an dessen Bordnetz, **dadurch gekennzeichnet, dass** die Drehzahlsteuerung des Elektromotors (10) durch pulsweitenmodulierte Eingangsignale (38) derart erfolgt, dass die pulsweitenmodulierten Eingangssignale (38) in einer Integrationseinrichtung (44) eines Umsetzers (46) integriert und danach die integrierten Signale (62) den Eingängen einer Mehrzahl von Komparatoren (64, 66, 68) mit verschiedenen Schaltschwellen als ein hinsichtlich seines Gleichspannungsanteils und seiner Form von dem Tastverhältnis der pulsweitenmodulierten Eingangssignale (38) abhängiges Sägezahnsignal (62) zugeführt werden, wobei die Ausgangssignale der Komparatoren (64, 66, 68) Schalteinrichtungen (22, 24, 26, 28) mit unterschiedlichen Vorwiderständen (30, 32) für den Motorstromkreis steuern.

8. Verfahren nach Anspruch 7, **dadurch gekennzeichnet, dass** das Bezugspotential der Komparatoren (64, 66, 68) von der gleichen Spannungsquelle (18, 20) abgeleitet ist wie die Versorgungspannung der Integrationseinrichtung (44).

9. Verfahren nach Anspruch 7 oder 8, **dadurch gekennzeichnet**, das ein Kondensator (58) der Integrationseinrichtung (44) des Umsetzers (46) entsprechend dem Tastverhaltnis der pulsweitenmodulierten Eingangssignale (38) während der High-Zeit aufgeladen und während der Low-Zeit über eine Entkoppelungsdiode (50) sowie einen Transistor (36) am Ausgang der Steuereinheit (34) entladen wird.

10. Verfahren nach einem der Ansprüche 7 bis 9, **dadurch gekennzeichnet, dass** den parallel geschalteten Eingängen der Komparatoren (64, 66, 68) das Ausgangssignal (62) der Integrationseinrichtung (44) zugeführt wird, während ihre Ausgänge getrennte Speisestromkreise des Elektromotors (10) mit unterschiedlichen Vorwiderständen (30, 32) steuern, wobei dem Komparator (64) mit der höchsten Schaltschwelle ein Motorstromkreis ohne Vorwiderstand zugeordnet ist.

## Claims

1. Circuit arrangement for operating an electric motor (10) at a variable speed from a DC voltage source (18, 20), in particular for operating a cooling fan blower motor of a motor vehicle from the on-board electrical system of the said motor vehicle, having a switching device (28) in the feed circuit of the electric motor (10), the said switching device closing the motor circuit via switching paths (22a, 24a, 26a) with different series resistors (30, 32), and also having a converter (46) which integrates pulse-width-modulated input signals (38) of a control unit (34), **characterized in that** the converter (46) has a plurality of comparators (64, 66, 68) with different switching thresholds, the outputs of the said comparators each being connected to the electrical switching device (28), with a connection (60) of an integration device (44) of the converter (46) being connected to a respective input of the comparators (64, 66, 68) in such a way that a sawtooth signal (62), which is dependent on the pulse duty factor of the pulse-width-modulated input signals (38) in terms of its DC voltage component and its shape, is applied to the said input.

2. Circuit arrangement according to Claim 1, **characterized in that** the sawtooth signal (62), of which the voltage level is variable, is simultaneously applied to the inputs of the comparators (64, 66, 68), with only those operational amplifiers (70, 72, 74) of the comparators (64, 66, 68) of which the reference signal at the inverting input is lower than the sawtooth signal (62) at the non-inverting input being switched on.

3. Circuit arrangement according to either of the preceding claims, **characterized in that** the output (39) of the control unit (34) for the electric motor (10) can be connected to earth (20) via the collector-emitter path of a transistor (36).

4. Circuit arrangement according to one of the preceding claims, **characterized in that** the integration device (44) and the comparators (64, 66, 68) are connected to the same reference voltage source (18, 20).

5. Circuit arrangement according to one of the preceding claims, **characterized in that** the connection (60) of a capacitor (58) of the integration device (44), which connection is averted from earth (20), is connected at one end to a respective input of the comparators (64, 66, 68) and at the other end to an output (39) of the control unit (34), which output delivers the pulse-width-modulated input signals (38), via a decoupling diode (50) and a resistor (56).

6. Circuit arrangement according to one of the preceding claims, **characterized in that** the outputs of the comparators (64, 66, 68) are connected to relays (22, 24, 26) via amplifiers (22b, 24b, 26b), the switching contacts (24a, 26a, 28a) of the said relays being connected to a connection (16) of the electric motor (10), in each case in parallel, at one end and being separately connected to earth (20), via series resistors (30, 32) or directly, at the other end.

7. Method for operating an electric motor (10) at a variable speed from a DC voltage supply system (18, 20), in particular for operating a cooling fan blower motor of a motor vehicle from the on-board electrical system of the said motor vehicle, **characterized in that** the speed of the electric motor (10) is controlled by pulse-width-modulated input signals (38) in such a way that the pulse-width-modulated input signals (38) are integrated in an integration device (44) of a converter (46) and then the integrated signals (62) are supplied to the inputs of a plurality of comparators (64, 66, 68) with different switching thresholds in the form of a sawtooth signal (62) which is dependent on the pulse duty factor of the pulse-width-modulated input signals (38) in terms of its DC voltage component and its shape, with the output signals from the comparators (64, 66, 68) controlling switching devices (22, 24, 26, 28) with different series resistors (30, 32) for the motor circuit.

8. Method according to Claim 7, **characterized in that** the reference potential of the comparators (64, 66, 68) is derived from the same voltage source (18, 20) as the supply voltage of the integration device (44).

9. Method according to Claim 7 or 8, **characterized in that** a capacitor (58) of the integration device (44) of the converter (46) is charged in accordance with the pulse duty factor of the pulse-width-modulated input signals (38) during the high time and is discharged via a decoupling diode (50) and also a transistor (36) at the output of the control unit (34) during the low time.

10. Method according to one of Claims 7 to 9, **characterized in that** the output signal (62) from the integration device (44) is supplied to the inputs of the comparators (64, 66, 68) which are connected in parallel, while the outputs of the said comparators control separate feed circuits of the electric motor (10) with different series resistors (30, 32), with a motor circuit without a series resistor being associated with the comparator (64) with the highest switching threshold.

## Revendications

1. Circuit pour la gestion d'un moteur électrique (10) à vitesse de rotation variable raccordé à une source (18, 20) de tension continue, en particulier pour la gestion d'un moteur de ventilateur d'air de refroidissement raccordé au réseau de bord d'un véhicule automobile, le circuit étant doté d'un dispositif de commutation (28) qui est prévu dans le circuit de courant d'alimentation du moteur électrique (10) et qui raccorde le circuit de courant du moteur à différentes pré-résistances (30, 32) par des parcours de commutation (22a, 24a, 26a), ainsi que d'un convertisseur (46) qui intègre des signaux d'entrée (38) en pulsations modulées en largeur d'une unité de commande (34),
**caractérisé en ce que**
le convertisseur (46) présente plusieurs comparateurs (64, 66, 68) qui présentent différents seuils de commutation et dont chacune des sorties est reliée au circuit électrique de commutation (28),
**en ce qu'**une borne de raccordement (60) d'un dispositif d'intégration (44) du convertisseur (46) est reliée à une entrée respective des comparateurs (64, 66, 68) de telle sorte qu'un signal (62) en dents de scie dont la composante de tension continue et la forme dépendent du taux d'échantillonnage des signaux d'entrée (38) en pulsations modulées en largeur y soient appliqués.

2. Circuit selon la revendication 1, **caractérisé en ce que** le signal (62) en dents de scie dont le niveau de tension est variable est appliqué simultanément sur les entrées des comparateurs (64, 66, 68), seuls les amplificateurs opérationnels (70, 72, 74) des comparateurs (64, 66, 68) dont le signal de référence appliqué sur l'entrée inversante est plus bas que le signal (62) en dents de scie appliqué sur l'entrée non inversante étant passants.

3. Circuit selon l'une des revendications précédentes, **caractérisé en ce que** la sortie (39) de l'unité de commande (34) prévue pour le moteur électrique (10) peut être reliée à la masse (20) par l'intermédiaire du parcours collecteur-émetteur d'un transistor (36).

4. Circuit selon l'une des revendications précédentes, **caractérisé en ce que** le dispositif d'intégration (44) et les comparateurs (64, 66, 68) sont raccordés à la même source (18, 20) de tension de référence.

5. Circuit selon l'une des revendications précédentes, **caractérisé en ce que** la borne de raccordement (60), non raccordée à la masse (20), d'un condensateur (58) du dispositif d'intégration (44) est reliée d'une part à une entrée des comparateurs (64, 66, 68) et d'autre part, par l'intermédiaire d'une diode de découplage (50) et d'une résistance (56), à une sortie (39) qui délivre les signaux d'entrée (38) en impulsions modulées en largeur de l'unité de commande (34).

6. Circuit selon l'une des revendications précédentes, **caractérisé en ce que** les sorties des comparateurs (64, 66, 68) sont raccordées par l'intermédiaire d'amplificateurs (22b, 24b, 26b) à des relais (22, 24, 26) dont les contacts de commutation (24a, 26a, 28a) sont raccordés d'une part en parallèle à chaque borne de raccordement (16) du moteur électrique (10) et d'autre part à la masse (20) par l'intermédiaire de pré-résistances (30, 32) ou directement.

7. Procédé pour la gestion d'un moteur électrique (10) à vitesse de rotation variable à un réseau (18, 20) à tension continue, en particulier pour la gestion d'un moteur de ventilateur d'air de refroidissement raccordé au réseau de bord d'un véhicule automobile, **caractérisé en ce que**
la commande de la vitesse de rotation du moteur électrique (10) s'effectue par des signaux d'entrée (38) en pulsations modulées en largeur de telle sorte que les signaux d'entrée (38) en pulsations modulées en largeur sont intégrés dans un dispositif d'intégration (44) d'un convertisseur (46),
**en ce que** les signaux intégrés (62) sont ensuite amenés aux entrées de plusieurs comparateurs (64, 66, 68) qui présentent différents seuils de commutation sous la forme d'un signal (62) en dents de scie dont la composante de tension continue et la forme dépendent du taux d'échantillonnage des signaux d'entrée (38) en pulsations modulées en largeur et
**en ce que** les signaux de sortie des comparateurs (64, 66, 68) commandent des dispositifs de commutation (22, 24, 26, 28) qui présentent différentes pré-résistances (30, 32) pour le circuit de courant du moteur.

8. Procédé selon la revendication 7, **caractérisé en ce que** le potentiel de référence des comparateurs (64, 66, 68) provient de la même source de tension (18, 20) que la tension d'alimentation du dispositif d'intégration (44).

9. Procédé selon la revendication 7 ou 8, **caractérisé en ce que** pendant le temps de montée, un condensateur (58) du dispositif d'intégration (44) du convertisseur (46) est chargé en correspondance au taux d'échantillonnage des signaux d'entrée (38) en pulsations modulées en largeur et **en ce que** pendant le temps de descente, ce condensateur est déchargé par l'intermédiaire d'une diode de découplage (50) ainsi que d'un transistor (36) prévus à la sortie de l'unité de commande (34).

10. Procédé selon l'une des revendications 7 à 9, **caractérisé en ce que** le signal de sortie (62) du dispositif d'intégration (44) est apporté aux entrées raccordés en parallèle des comparateurs (64, 66, 68), **en ce que** les sorties de ce dernier commandent des circuits de courant d'alimentation du moteur électrique (10) présentant différentes pré-résistances (30, 32) et **en ce qu'**un circuit de courant de moteur sans pré-résistance est associé au comparateur (64) qui présente le seuil de commutation le plus élevé.
